# EUROPEAN PATENT SPECIFICATION

(11) **EP 1 460 805 B1**
(45) Date of publication and mention of the grant of the patent: **11.03.2015**
(21) Application number: 04006578.1
(22) Date of filing: 18.03.2004
(51) Int. Cl.: H04L 29/08, H04L 12/54, H04L 29/06

(54) **System and method for network interfacing**
Systeme und Verfahren zur Schnittstellen
Système et procédé pour assurer une interface réseau

(30) Priority: 20.03.2003 US 456260 P; 20.03.2003 US 456266 P; 20.03.2003 US 456322 P; 30.03.2003 US 456265 P; 10.06.2003 US 477279 P; 11.06.2003 US 478106 P
(43) Date of publication of application: 22.09.2004
(73) Proprietor: Broadcom Corporation, Irvine, CA 92617 (US)
(72) Inventor: Elzur, Uri, 92606 Irvine, Ca. (US); Fan,Kan F., 91765 Diamand Bar, Ca. (US); Lindsay, Steven, 92692 Mission Viejo, Ca. (US); McDaniel, Scott S, 92861 Villa Park (US)
(74) Representative: Jehle, Volker Armin

(56) References cited:
- US-A1- 2001 023 460
- US-A1- 2002 120 763
- US-A1- 2003 046 396
- US-B1- 6 253 334
- US-B1- 6 529 963

## Description

### FIELD OF THE INVENTION

Certain embodiments of the invention relate to interfaces for networks. More specifically, certain embodiments of the invention relate to a method and system for network interfacing.

### BACKGROUND OF THE INVENTION

More information is being processed and stored as network traffic (e.g., Internet traffic) continues to grow at an astonishing rate. The average size of a file or a message continues to increase as larger amounts of data are generated, especially with respect to media rich files and messages. Consequently, more servers and more storage are being employed. To deal with the deluge of information, Data Centers used by Enterprises or Internet Service Providers (ISPs) have gained in popularity. Data Centers are high-density computing configurations generally characterized by high performance, low power and minimal real estate requirements.

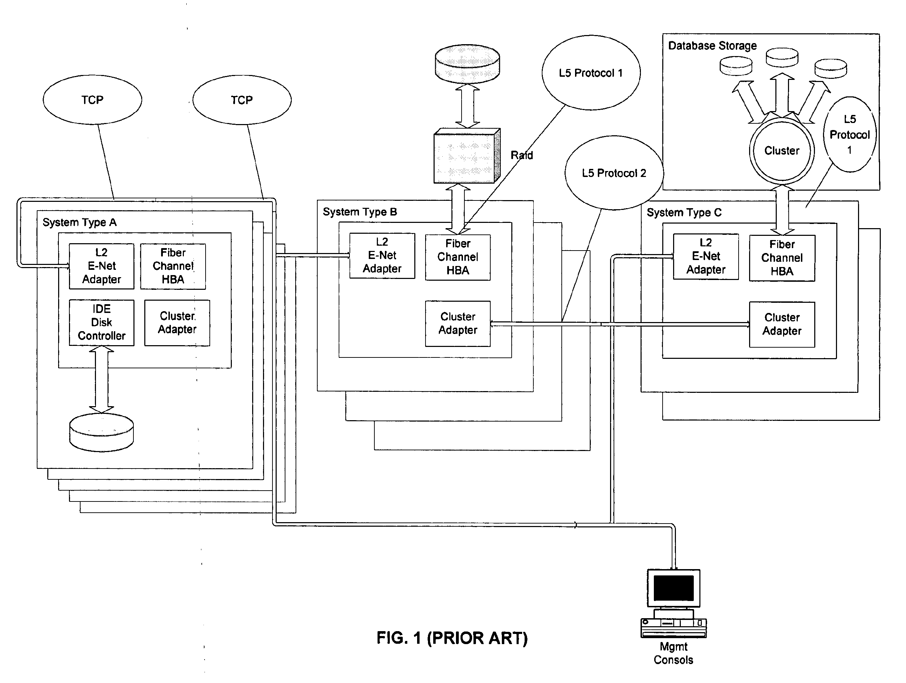

FIG. 1 shows a general arrangement for a Data Center in three tiers, although in some cases the tiers may be collapsed. The first tier interfaces the external network (e.g., a local area network (LAN) or a wide area network (WAN)) and directly serves the clients that typically run transmission control protocol/Internet protocol (TCP/IP) applications (e.g., hypertext transport protocol (HTTP) 1.0 and HTTP 1.1). The first tier has static information from which it can draw via its direct attached storage (DAS). To satisfy requests for dynamic content or for transactions, the first tier interfaces with the second tier servers. The second tier is also known as the Application Tier and has multiple communication requirements: high performance storage access for content typically serviced over a Fibre Channel Storage Area Network (SAN); communication with first tier servers over LAN with TCP/IP over Ethernet; communication with the third tier for data base access with a low latency, low central processing unit (CPU) utilization fabric such as a Virtual Interface Architecture (VIA) for clustering and Interprocess Communication (IPC). Second tier servers often communicate among themselves for load sharing and concurrent execution of the application. Hence, a second tier machine may employ three different fabrics: LAN, SAN and clustering. A similar description is applicable to the third tier. Hence, each server has a collection of adapters to serve its requirements for networking, storing and clustering. Such requirements produce systems with substantial power and space requirements.

The three separate networks are quite different from each other. Cluster, small computer system interface (SCSI) for DAS and Fibre Channel use Host Bus Adapters (HBAs) and operate directly on application data and run complete layer 2 (L2), layer 3 (L3), layer 4 (L4) and layer 5 (L5) protocol processing stacks within on-board computers. These programs are large (typically greater than 100 KB) and computationally quite intensive. Furthermore, these programs expect large amounts of memory to operate. Additional adapters are also required for clustering/disk accesses. Block level storage access requires a dedicated network to run the SCSI command set (e.g., SCSI-architecture-model-2 (SAM-2)) on a dedicated cable (e.g., DAS) or a specialized infrastructure like Fibre Channel to satisfy unique requirements to provide high bandwidth, low latency and robustness. Clustering usually employs a specialized adapter that supports a very low latency network infrastructure that is usually proprietary. It also uses a special software interface to the operating system (OS) to minimize host overhead by employing OS Kernel bypass techniques. As these different networks have evolved separately with their own unique requirements, separate adapter cards were needed.

As density requirements for servers increase, as evidenced by the use of Server Blades in servers, the space required for the three different types of adapters is becoming less available. The problem is further exacerbated since additional adapters may be used to provide fault tolerance or load balancing. Furthermore, financial considerations tend to drive organizations to seek a lower Total-Cost-of-Ownership (TCO) solution. The cost of managing three different fabrics and the toll on the information technology (IT) departments which must provide personnel trained in multiple technologies are substantial burdens to bear.

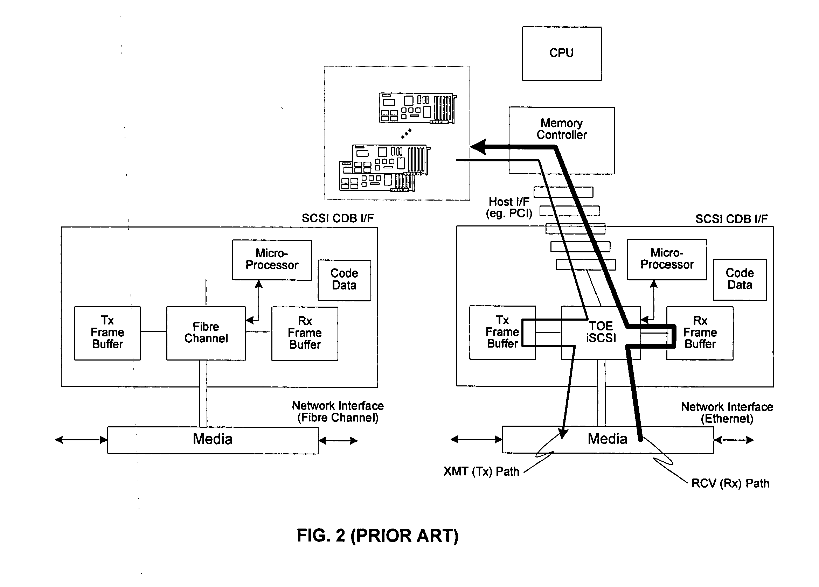

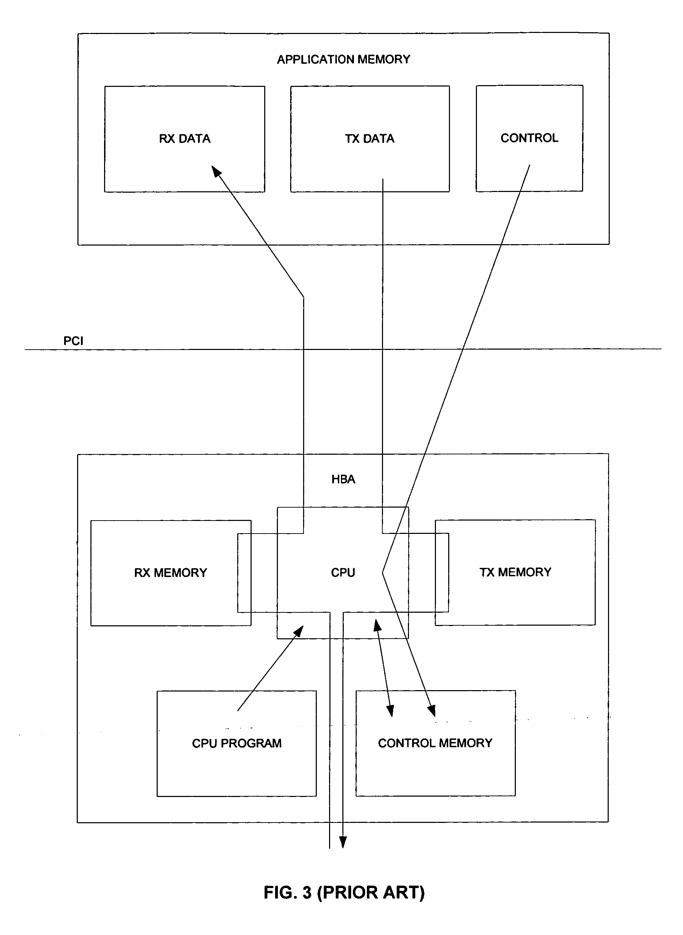

FIGS. 2 and 3 show conventional HBA arrangements and illustrate data and control flow. The HBA used for Fibre Channel and SCSI implements the complete protocol stack on the HBA and exposes the OS to a SCSI-like interface such as, for example, a command descriptor block (CDB). This places the burden of implementation of the complete conversion from an application memory down to the wire protocol on the adapter. Consequently, a large CPU with a large attached memory is used. The large attached memory is used to store the CPU program, transmit (TX) data, receive (RX) data as well as copies of host control structures.

Remote direct memory access (RDMA) adapters for clustering such as used in Infiniband systems have similar architectures with even greater requirements for local memory to keep a copy of a memory translation table and other control structures.

Until recently, TCP/IP was not considered a feasible solution as it runs in software which generally involves more CPU overhead and high latencies. Furthermore, TCP/IP does not guarantee all segments are received from the wire in the order that they were transmitted. Consequently, the TCP layer has to re-order the received segments to reconstruct the originally transmitted message. Nevertheless, protocols have been developed that run on TCP/IP. For example, Internet SCSI (iSCSI) places the SCSI command set on top of TCP/IP. In another example, iWARP places the IPC technology of RDMA on top of TCP/IP.

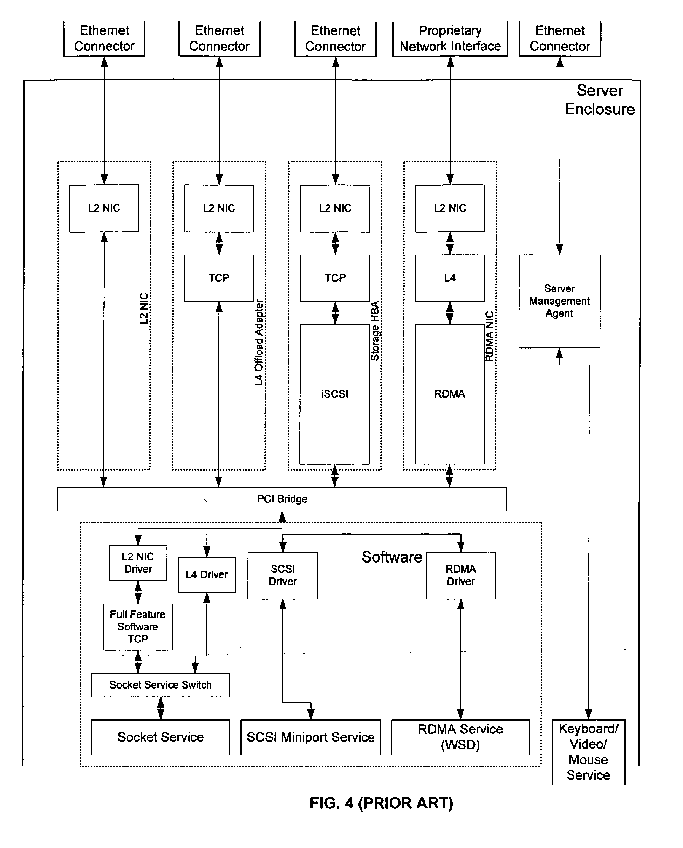

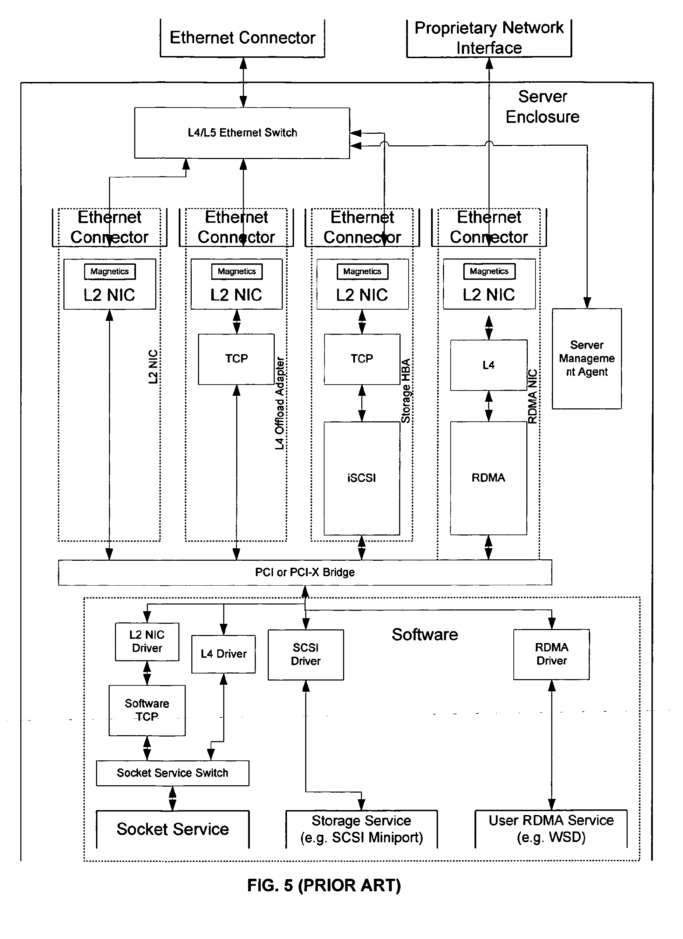

FIGS. 4 and 5 show conventional servers. In FIG. 4, each type of traffic has its respective subsystem. For example, the storage subsystem has its own Ethernet connector, its own storage HBA and its own driver. The conventional server may even include one or more proprietary network interfaces. FIG. 5 shows another conventional server in which a layer 4/layer 5 (L4/L5) Ethernet switch is employed to reduce the number of Ethernet connectors. However, the conventional server still employs separate adapters and network interface cards (NICs). Furthermore, the conventional server may still employ a proprietary network interface which cannot be coupled to the L4/L5 Ethernet switch.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the present invention may be found in, for example, systems and methods that provide network interfacing according to the claims.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 shows a general arrangement for a Data Center in three tiers.
FIG. 2 shows conventional host bus adapter (HBA) arrangements.
FIG. 3 shows a conventional HBA arrangement.
FIG. 4 shows a conventional server.
FIG. 5 shows another conventional server.
FIG. 6 shows a representation illustrating an embodiment of a Data Center according to the present invention.
FIG. 7 shows a representation illustrating an embodiment of a converged network controller (CNC) architecture and a host system according to the present invention
FIG. 8 shows a representation illustrating an embodiment of a remote-direct-memory-access network interface card interface (RI) according to the present invention
FIG. 9 shows a representation illustrating an embodiment of a server according to the present invention.
FIG. 10 shows a representation illustrating an embodiment of a server blade according to the present invention.
FIG. 11 shows a representation illustrating an embodiment of a TCP offload engine during receive according to the present invention.
FIG. 12 shows a representation illustrating an embodiment of a TCP offload engine during transmit according to the present invention.
FIG. 13 shows an embodiment of a method for storing and fetching context information according to the present invention.
FIG. 14 shows a representation illustrating an embodiment of a CNC software interface according to the present invention.
FIG. 15 shows a representation illustrating an embodiment of a CNC kernel remote-direct-memory-access (RDMA) software interface according to the present invention.

### DETAILED DESCRIPTION OF THE INVENTION

Aspects of the present invention may be found in, for example, systems and methods that provide network interfacing. Some embodiments according to the present invention provide a device that can handle all the communication needs of a computer (e.g., a server, a desktop, etc.) The device may use protocols that are running on transmission control protocol/Internet protocol (TCP/IP) such as, for example, TCP/IP/Ethernet. Storage traffic may be handled using an Internet small computer system interface (iSCSI) protocol which relies on TCP as the transport and may employ a TCP offload engine to accelerate its operation. Clustering traffic may be handled using a remote direct memory access (RDMA) protocol that runs on top of TCP. Clustering may be combined into the same device as TCP offload. Further convergence may be achieved if the iSCSI protocol uses the RDMA fabric.

Some embodiments according to the present invention may provide for the convergence of three fabrics into a single TCP/IP/Ethernet-based fabric. The present invention also contemplates the convergence of more or less than three fabrics into a single TCP/IP/Ethernet-based fabric. One device may be placed on a motherboard and may support, for example, local area network (LAN), storage area network (SAN), network attached storage (NAS) and Cluster/Interprocess Communication (IPC). The device may allow for flexible resource allocation among the different fabrics and may allow for an implementation in which space is limited (e.g., a Server Blade environment). For example, a single device may replace, for example, three subsystems. Technology may be implemented using a single back plane to convey all types of traffic instead of three different protocols each requiring three dedicated lanes. Such technology may reduce cost and complexity as well as save on space.

Some embodiments according to the present invention provide an architectural approach (e.g., a multiple-in-one approach) in which storage, clustering and network requirements that need or otherwise would benefit from hardware acceleration are identified and implemented in hardware. Some aspects of complex processing may still be handled by the host. The multiple-in-one device may provide savings in silicon, processing power and memory requirements. Furthermore, the cost of each implementation and space used by each implementation may be substantially reduced such that features and functions may be combined on a single chip.

Some embodiments according to the present invention provide for a flow-through network interface card (NIC). The flow-through NIC may be optimized to minimize the resources used to handle different traffic types and different interfaces. For example, an iSCSI state may be kept mainly on a host memory. The host memory may be used, for example, for buffering of incomplete or uncommitted TCP, iSCSI or clustering data. Information tracking this data may be loaded into the single chip as needed. Consequently, the program on the adapter may be substantially smaller and use less central processing unit (CPU) power and memory.

Some embodiments according to the present invention may provide that some time-consuming mechanisms (e.g., per byte processing) may be performed in hardware. Some examples of time-consuming processes include, for example, header-data separation, zero-copy service to application buffers, data integrity checks and digests, and notification optimizations.

Some embodiments according to the present invention may provide for mode coexistence. On-chip resources (e.g., a context memory) that are used to keep the state information may be used with substantial flexibility based upon, for example, the needs of the host. The host may control the number of connections used for each communication type. The number of bytes used to store the context varies by connection type (e.g., TCP, TCP and IPSec, iSCSI on TCP, iSCSI on RDMA, and RDMA) and by number of outstanding activities (e.g., the number of windows/regions, RDMA Reads, Commands, etc.) The host may control the context size per connection, thereby further optimizing the device utility. The device may also be fully compatible with existing LAN controllers. LAN traffic may be supported concurrently with TCP offload, iSCSI and RDMA traffic.

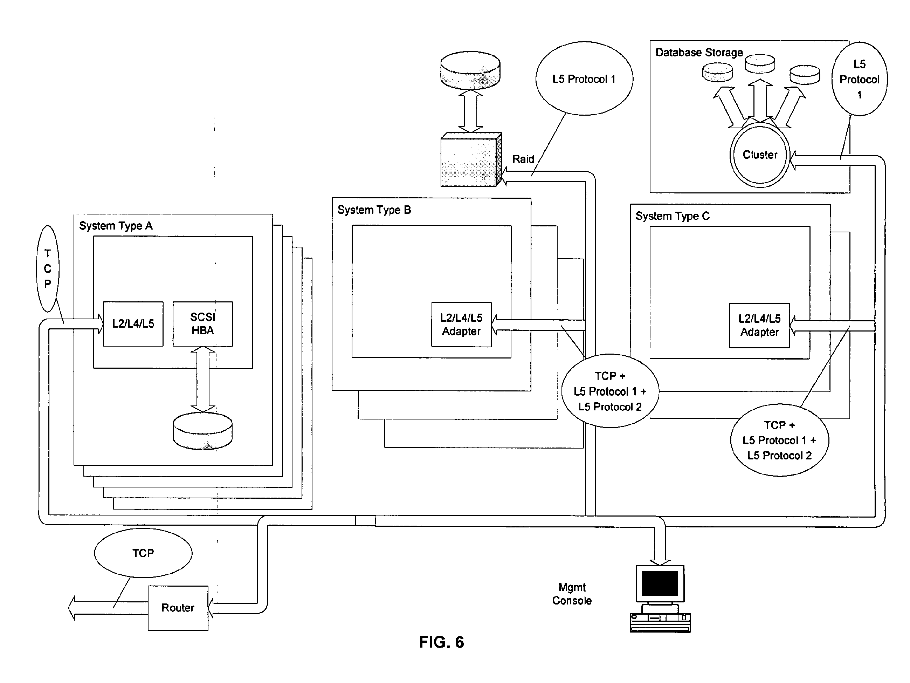

FIG. 6 shows a representation illustrating an embodiment of a Data Center according to the present invention. The Data Center is illustrated as a three tier architecture, however, the present invention also contemplates architectures with more or less than three tiers. In each tier, a server is shown with a layer 2/layer 4/layer 5 (L2/L4/L5) adapter. The single adapter may handle, for example, network traffic, storage traffic, cluster traffic and management traffic. In one embodiment according to the present invention, the single fabric may be based on TCP/IP. As a consequence of using a single L2/L4/L5 adapter for a particular server or server blade, the particular server or server blade may have a single IP address.

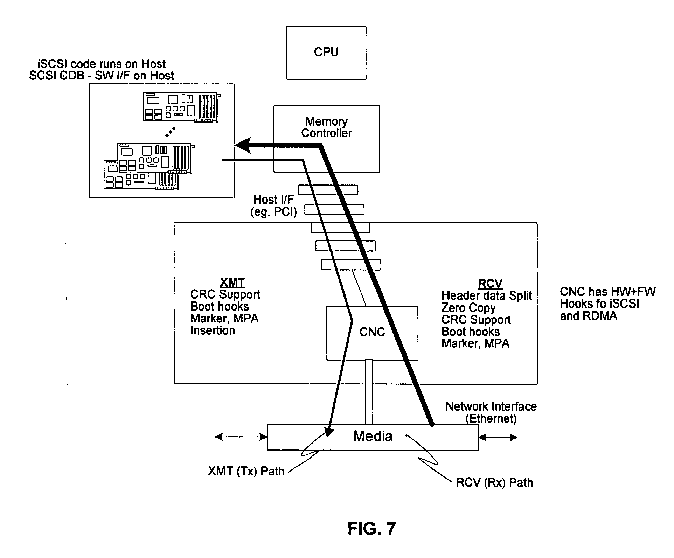

FIG. 7 shows a representation illustrating an embodiment of a converged network controller (CNC) architecture and a host system according to the present invention. The CNC architecture may be adapted to provide a flow-through NIC. In one embodiment, the CNC architecture provides a TCP enabled Ethernet controller (TEEC) that provides TCP offload services. Hardware, firmware and software may be added to provide layer 5 (L5) functionality. Protocols such as iSCSI and RDMA may be considered L5 technologies. Unlike conventional host bus adapter (HBA) architectures, the CNC architecture may provide for a different functionality split according to some embodiments of the present invention.

iSCSI may provide, for example, control functions and data transfer functions. The control functions may include, for example, discover, security, management, login and error recovery. The data transfer portion may build iSCSI protocol data units (PDUs) from the SCSI CDBs it gets from the operating system (OS) and may submit them to the iSCSI peer for execution. An iSCSI session might include multiple TCP connections with each carrying commands, data and status information. For each connection, iSCSI may keep state information that is updated by iSCSI PDUs transmitted or received. The CNC architecture may keep all of this data on the host, thereby saving the costs and complexity of running it on the CNC. This also may overcome the limitations imposed by the limited memory available on a conventional HBA. The software interface may be exposed to the OS may be similar or identical to a conventional HBA. For example, the CNC may support the same SCSI miniport or Stor Port interface as in a Microsoft OS. The CNC may partition the work between the SCSI miniport running on the host and the CNC hardware differently from a conventional HBA.

An embodiment of a hardware interface to the CNC for iSCSI operations according to the present invention is set forth below.

During transmission, the host may get the SCSI CDB and the iSCSI context for a connection and may then construct an iSCSI command with or without data. The host may transfer to the CNC an iSCSI PDU without the Digest(s) and the marker. A separate header and payload digest may be used. A cyclical redundancy check (CRC) such as CRC32c may be used. Specific fields in the PUD may carry the CRC results. The fields may also provide for a finite-interval marker (FIM) or other types of markers. The marker may be a 32-bit construct that may be placed in the TCP byte stream in a predetermined interval that is possibly negotiated during login. The CNC may construct TCP segments that carry the iSCSI PDUs, may compute the CRC, may insert the CRC in the corresponding fields and may insert the marker. Since the overhead of constructing an iSCSI PDU may be limited as compared with per-byte operations or squeezing a marker inside the data, which may necessitate a copy or break of the data to allow for the marker, these operations may be moved into the CNC. Via a direct memory access (DMA) engine, the iSCSI PDU may be placed in the CNC in pieces that meet the TCP maximum transmission unit (MTU). If the PDU is larger than the TCP MTU, then the CNC may chop the PDU into MTU size segments. Each section of the PDU may then be encapsulated into a TCP segment. The CNC may account for the marker (e.g., the FIM) and the locations of the header and data digests and may insert them in place for all the segments that combined form the iSCSI PDU.

Some embodiments according to the present invention may benefit from the construction of the iSCSI PDU by the host instead of the on an HBA since the host CPU may be much faster than an embedded CPU and memory on an HBA, may have more memory resources and may be constrained by fewer limitations in constructing the iSCSI PDU at wire speed or faster with low CPU utilization. Consequently, the CNC may be leanly designed and may focus on data transfer acceleration rather than on control.

For a SCSI Write command encapsulated into an iSCSI command, a driver may keep an initiator task tag (ITT), a command sequence number (CmdSN), a buffer tag from the SCSI command and a host location for the data. The driver may use the information to program the CNC such that it may be ready for an incoming R2T. The iSCSI target may reply with an R2T for parts of the data or for the whole buffer. With possibly no software assistance, the CNC may automatically fetch the requested data from the host memory for transmission.

For a SCSI read command encapsulated into an iSCSI command, a driver may keep the IIT, the CmdSN, the buffer tag from the SCSI command and the host location for the data. The driver may use the information to program the CNC such that it may be ready for an incoming DATA_IN.

During reception, as TCP segments are received for a connection that is an iSCSI connection, the CNC may keep track of iSCSI PDU boundaries. In keeping track of the iSCSI PDU boundaries, the CNC may process iSCSI PDU headers or markers (e.g., FIMs) and may receive assistance from drivers. When ISCSI traffic flows in order, the CNC may process one iSCSI PDU header after another to get the type of the PDU and its length. The marker, if used, may be placed in known intervals in the TCP sequence number. If the CNC is looking for the beginning of the next PDU in the TCP byte stream, it may get it from the marker. If the marker is not used, the driver may be of some assistance with out-of-order TCP segments. The driver may re-order the TCP data, may process the iSCSI PDU headers and may then feed the CNC with the next expected TCP sequence number for the next iSCSI PDU.

When the iSCSI PDU boundaries are known, the CNC may locate markers (e.g., FIM, if used) and may remote the markers from the data stream. The marker may not be part of the digest computation. The CNC may compute digests (if used), header and data and compare them to the values found in the incoming PDU. In case of an error, the CNC may flag it and may drop the PDU or may pass it to the iSCSI software for further processing and possible recovery.

For DATA_IN, the CNC may separate the iSCSI PDU header and data. The CNC may use the ITT and the buffer offset to look into a table built when a SCSI Read command was sent. The data portion of the PDU may be stored in a designated buffer based upon, for example, a look-up value from the table. The header may be passed to the driver for further processing such as, for example, state updating.

The CNC may receive an R2T iSCSI command. Using the ITT, the buffer offset and a desired data transfer length, the CNC may fetch data from the host and construct an iSCSI DATA_OUT PDU in response.

The CNC may integrate in it complete RDMA capabilities. RDMA may be used to move data between two machines with minimal software overhead and minimal latency. RDMA may be used, for example, for IPC and for latency sensitive applications. Using RDMA, data transfer may be accelerated and may be separated from the control plane. It may accelerate any application without have to add any application knowledge to the CNC. For example, in support of iSCSI, the CNC might have to parse the iSCSI PDU, keep iSCSI specific state information and follow the iSCSI protocol for generating some actions such as, for example, a DATA_OUT in response to an R2T). RDMA may reduce or eliminate the need for additional application knowledge. Thus, the CNC may accelerate many applications over its RDMA service.

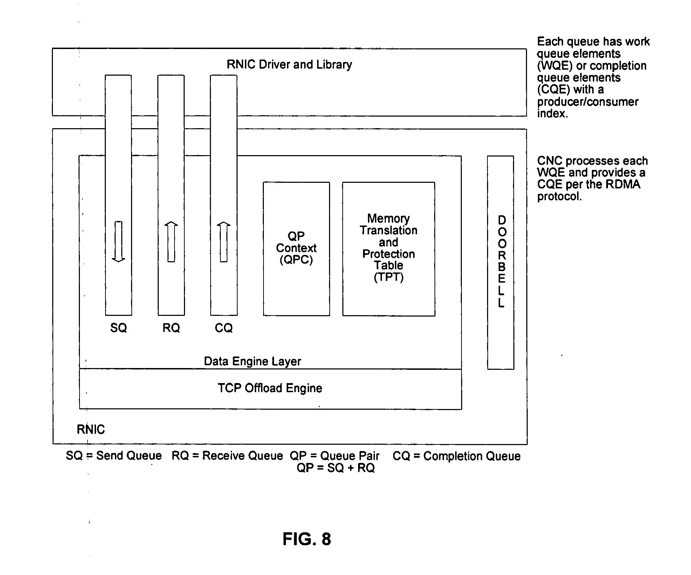

An RDMA NIC (RNIC) may support a marker-based upper layer protocol data unit (ULPDU) aligned (MPA) framing protocol such as, for example, MPA/direct data placement (DDP) as well as RDMA. The RNIC may support such protocols while exposing queue interfaces to the software as illustrated in FIG. 8. FIG. 8 shows a representation illustrating an embodiment of RNIC interface (RI) according to the present invention. The RI may include, for example, the RNIC and the RNIC driver and library. In the illustrated queue pair (QP) model, each queue (e.g., a send queue (SQ), a receive queue (RQ) and a completion queue (CQ)) may have work queue elements (WQEs) or completion queue elements (CQEs) with a producer/consumer index. The CNC may process each WQE and may provide a CQE per the RDMA protocol. The CNC implementation may also be quite efficient with respect to the amount of memory and state kept on-chip.

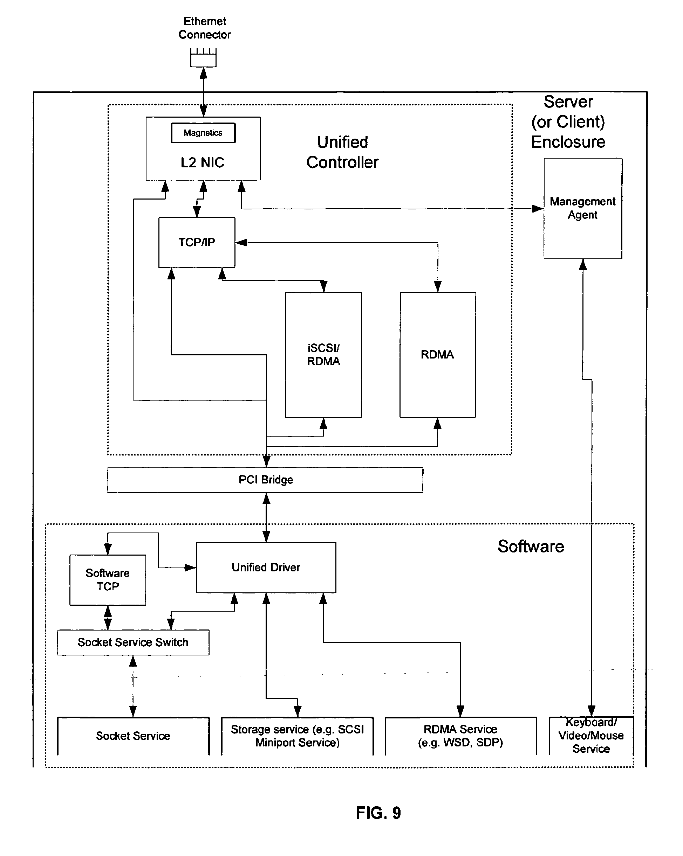

The CNC may support multiple types of communications concurrently. For example, the CNC may support Ethernet traffic, TCP/IP traffic, iSCSI traffic, kernel RDMA, user-space RDMA and management traffic as illustrated in FIG. 9. FIG. 9 shows a representation illustrating an embodiment of a server (or client) according to the present invention. The server is shown with a single Ethernet connector coupled to a unified controller. The unified controller may allow for the sharing of particular components such as, for example, an L2 NIC and a TCP/IP processor. The software of the server includes, for example, a unified driver which provides the drivers for the multiple types of communication. The data may also flow along a unified path through the unified driver to the various services.

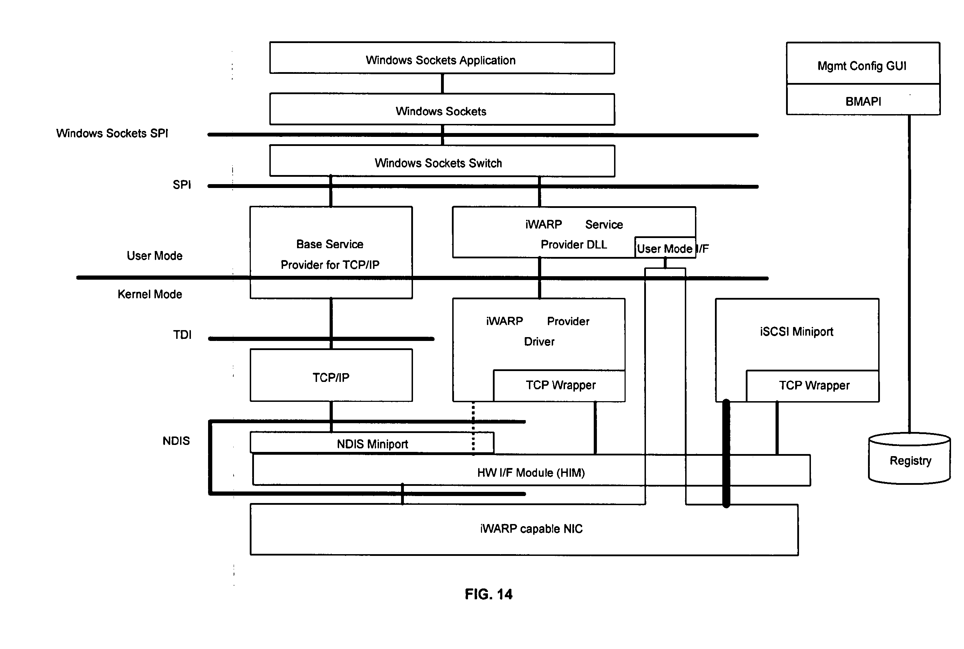

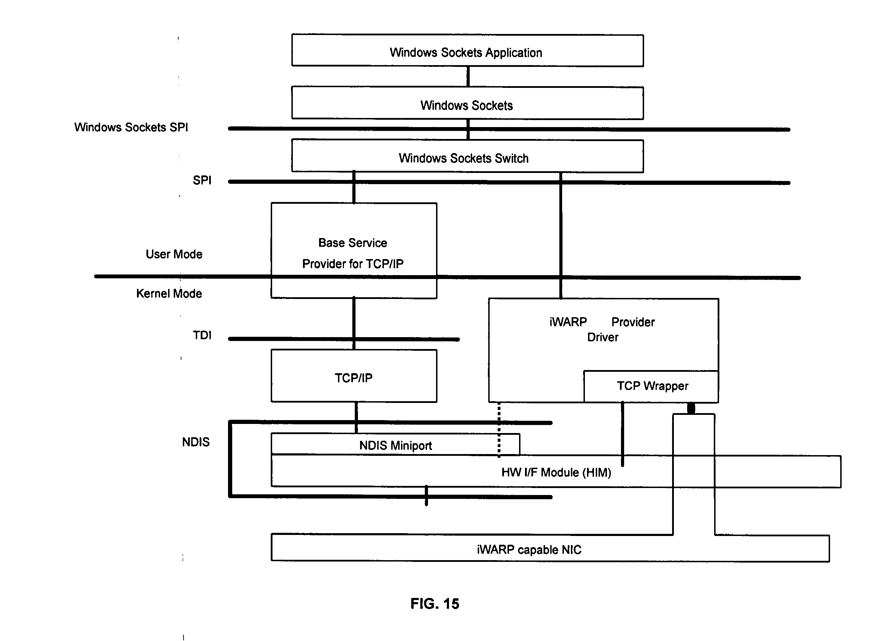

FIGS. 14 and 15 show embodiments of support by the CNC of different types of traffic according to the present invention. For example, FIG. 14 shows an embodiment of a CNC software interface according to the present invention. In another example, FIG. 15 shows an embodiment of a CNC kernel RDMA software interface according to the present invention.

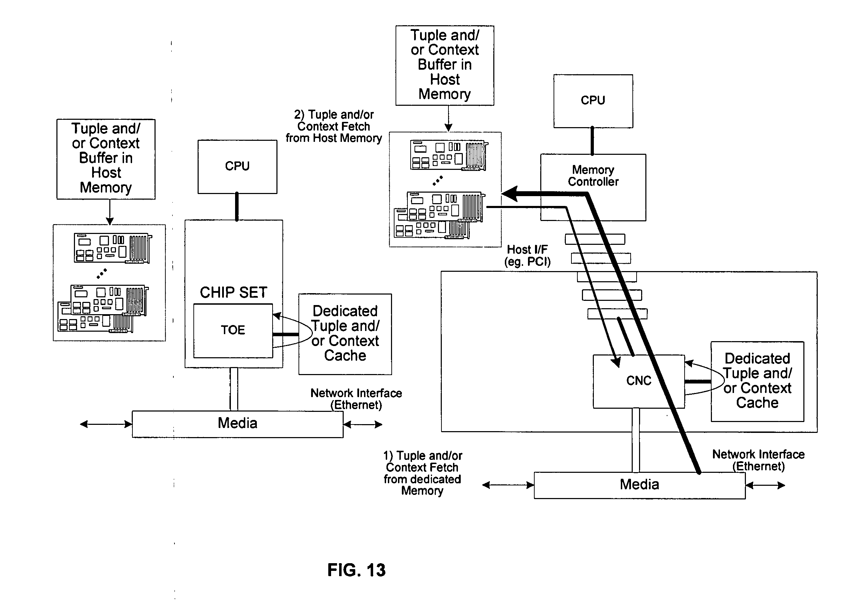

The CNC may be configured to carry different traffic types on each TCP/IP connection. For every TCP/IP connection supported, the CNC may keep context information as illustrated in FIG. 13. The context information may be dynamically allocated to support any mix of traffic and may be flexible enough to allow for different amounts of resources even among connections of the same type. For example, some RDMA connections may be supported by many memory windows/regions while other RDMA connections may be supported by only a few memory windows/regions. The context information may be adapted to best serve each connection.

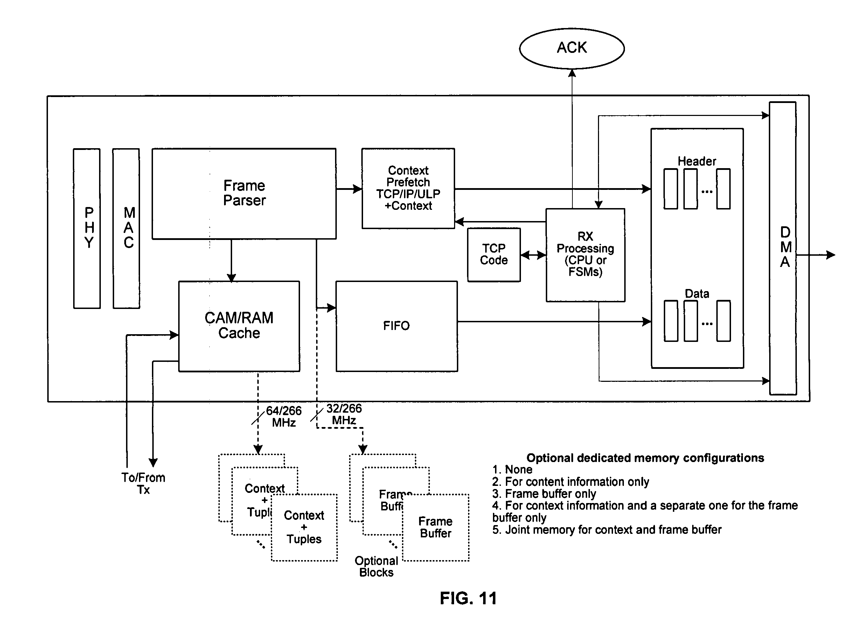

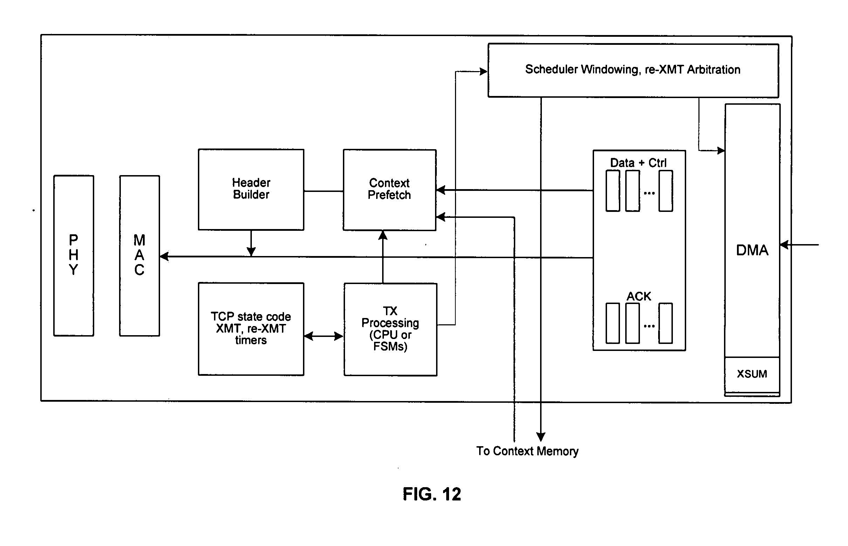

The CNC may integrate communication technologies that were traditionally delivered in separate integrated circuits and typically on separate adapters. The CNC may provide a TCP offload engine. FIGS. 11 and 12 show representation illustrating an embodiment of a TCP offload engine during receive and transmit, respectively, according to the present invention. The CNC may focus on data transfer in the hardware and connection set-up and tear-down in the software. The CNC may also provide iSCSI acceleration in hardware with minimal hardware that may deal with intensive per-byte operations or with accelerations (e.g., performance critical accelerations, R2T). In addition, the CNC may provide full-functionality RDMA with minimal memory foot print and may exhibit lower cast than a other proprietary solutions. A software unified driver architecture may manage the hardware resources and may allocate them to different communications mechanisms. The CNC approach also provides for high versatility mapping of received frames payload to a set of different types of host buffer structures (e.g., physical address, linked lists and virtual addressing). The CNC approach may also allow for simultaneous operation of all of the communication types and for dynamic resource allocation for them.

One or more embodiments according to the present invention may have one or more of the advantages as set forth below.

Some embodiments according to the present invention may provide a unified data path and a unified control path. A special block for each may be provided.

Some embodiments according to the present invention may provide multiple functions supported by a single IP address in a hardware accelerated environment.

Some embodiments according to the present invention may provide an efficient approach toward context memory through, for example, a flexible allocation of limited hardware resources for the various protocols in a hardware accelerated TCP offload engine. In at least one embodiment, the memory may be pooled instead of providing a dedicated resource per function.

Some embodiments according to the present invention may provide a single TCP stack with hardware acceleration that supports multiple protocols.

Some embodiments according to the present invention may provide acceleration of converged network traffic that may allow for the elimination of a multiple deep packet lookup and a series of dedicated IC to process each of the protocols separately.

Some embodiments according to the present invention may provide for a low cast acceleration of converged network traffic by a single integrated circuit into multiple host software interfaces and may provide multiple distinct existing services.

Some embodiments according to the present invention may provide for a low cost acceleration of converged network traffic by a single integrated circuit into a single bus interface (e.g., peripheral component interface (PCI)) on a host hardware and may provide multiple distinct existing services. Multiple separate bus slots may be eliminated and low cost system chipsets may be allowed.

Some embodiments according to the present invention may provide for single chip that may not need an external memory or a physical interface and that may lower the cost and foot print to allow penetration into price sensitive markets. The single chip concept may allow for substantially higher volume than existing traditional designs.

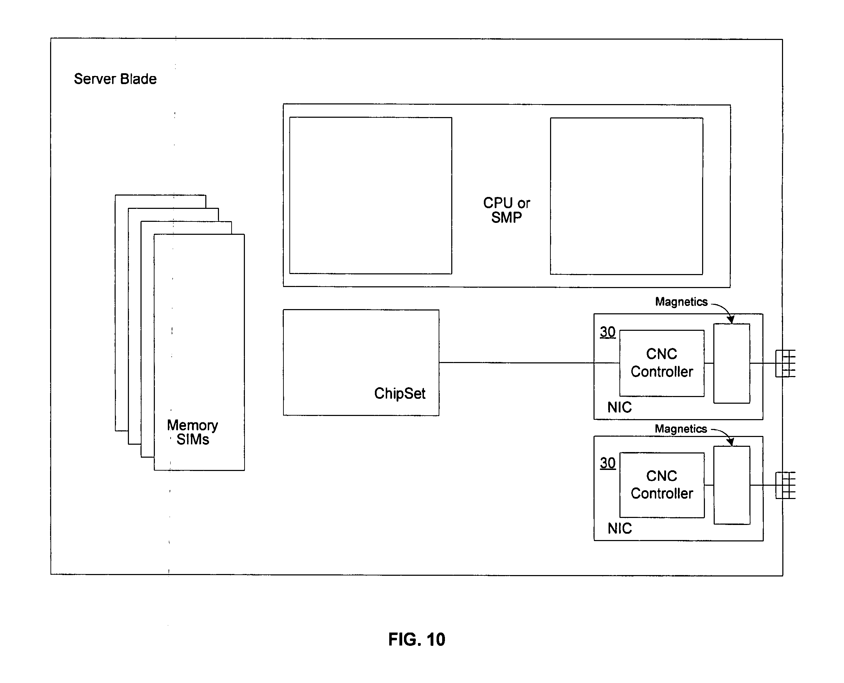

Some embodiments according to the present invention may provide higher density servers via, for example, server blades adapted for the CNC approach, by converging all of the communications interfaces for the server on one connector. All of the server connectivity may be funneled through one connection on the back plane instead of multiple connections. The minimal footprint of the CNC may provide benefits especially in a space constrained environment such as servers (e.g., Server Blade servers). FIG. 10 shows a representation illustrating an embodiment of a server blade according to the present invention.

Some embodiments according to the present invention may eliminate the need for a plurality of registered jack-45 (RJ-45) connectors, thereby saving the cost of the connectors and the cabling along with alleviating the need to run multiple, twisted-pair cables in a physically constrained environment.

Some embodiments according to the present invention may provide functionality and integration, for example, by supporting all of the communication needs of the server. The need for separate IPC adapters and separate storage adapters may be reduced or eliminated. By using a single chip, limited real estate and one connector in a server, communications cost may be substantially reduced.

Some embodiments according to the present invention may provide high density servers by allowing the removal of functionality from each server. Density may be increased, for example, by eliminating the need for hard disk, any storage adapter on each server or the need for a separate KVM for each server.

Some embodiments according to the present invention may provide high density servers with minimal power consumption by using smaller power supplies and by minimizing the need for cooling that may allow for smaller mechanical form factors.

Some embodiments according to the present invention may provide for low cost servers with low cost CPUs that may deliver the same performance as may be expected from high cost CPUs with non-accelerated network controllers.

Some embodiments according to the present invention may provide for the integration of server management. The integration of server management may eliminate, for example, the need for a dedicated connector and may save the cost for a three-way switch typically used to split the management traffic from the rest of the communication traffic.

Some embodiments according to the present invention may replace the functionality provided by four or more separate adapters and may eliminate the need for a dedicated L4/L5 switch in front of them.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A data center, comprising:
a first tier comprising a first server;
a second tier adapted to connect to the first tier, the second tier comprising a second server; and
a third tier adapted to connect to the second tier, the third tier comprising a third server,
wherein at least one of the first server, the second server and the third server processes a plurality of different traffic types over a single fabric,
characterrized by
a converged network controller (further referred as "CNC") architecture adapted to support said different types of traffic and a functionality split.

2. The data center according to claim 1, wherein said CNC architecture is adapted to provide a transmission control protocol (further referred as "TCP") offload engine, an internet small computer system interface (further referred as "iSCSI") acceleration, and/or a full-functionality remote direct memory access (further referred as "RDMA").

3. The data center according to claim 1 or 2, wherein said CNC architecture is adapted to provide a flow-through network interface card (further referred as "NIC"), and/or a transmission control protocol (further referred as "TCP") enabled Ethernet controller that provides TCP offload services.

4. The data center according to claim 1, wherein the first server processes at least network traffic and direct attached storage (further referred as "DAS") traffic over the single fabric.

5. The data center according to claim 1, wherein the first server uses a single controller for processing at least network traffic and DAS traffic.

6. The data center according to claim 1, wherein the second server processes at least two of network traffic, storage traffic and cluster traffic over the single fabric.

7. The data center according to claim 1, wherein the second server uses a single controller for processing at least two of network traffic, storage traffic and cluster traffic.

8. The data center according to claim 7, wherein storage traffic comprises traffic from a redundant-array-of-independent-disks (further referred as "RAID") configuration or traffic from storage devices accessible via a network.

9. The data center according to claim 1, wherein the third server processes at least two of network traffic, storage traffic and cluster traffic over the single fabric.

10. A server, comprising:
an integrated chip;
an Ethernet connector adapted to connect to the integrated chip,
wherein the Ethernet connector and the integrated chip can process a plurality of different types of traffic,
characterrized by
a converged network controller (further referred as "CNC") adapted to support said different types of traffic and a functionality split.

11. The server according to claim 10, wherein said CNC is adapted to provide a transmission control protocol (further referred as "TCP") offload engine, an internet small computer system interface (further referred as "iSCSI") acceleration, and/or a full-functionality remote direct memory access (further referred as "RDMA").

12. The server according to claim 10 or 11, wherein said CNC is adapted to provide a flow-through network interface card (further referred as "NIC"), and/or a transmission control protocol (further referred as "TCP") enabled Ethernet controller that provides TCP offload services.

13. The server according to claim 10,
wherein the server comprises a blade server, and
wherein the integrated chip is part of a blade mounted in the blade server.

14. The server according to claim 10, wherein the Ethernet connector processes the plurality of different types of traffic over a single fabric.

15. A method for communicating with a server, comprising:
(a) using a single fabric for a plurality of different types of traffic; and
(b) processing the plurality of different types of traffic via a single layer 2 (further referred as "L2") connector of the server, **characterized by**
(c) using a converged network controller (further referred as "CNC") adapted to support said different types of traffic and a functionality split.

16. The method according to claim 15, wherein said CNC architecture is used to provide a transmission control protocol (further referred as "TCP") offload, an internet small computer system interface (further referred as "iSCSI") acceleration, and/or a full-functionality remote direct memory access (further referred as "RDMA").

17. The method according to claim 15 or 16, wherein said CNC architecture is used to provide a flow-through service, and/or a transmission control protocol (further referred as "TCP") that provides TCP offload services.

18. The method according to claim 15, wherein the single fabric comprises an Ethernet-based fabric.

19. The method according to claim 15, wherein step (b) comprises processing the plurality of different types of traffic via an Ethernet connector of the server.

20. A method for communicating in a data center, comprising:
(a) accessing a storage system over a single fabric;
(b) accessing a cluster over the single fabric; and
(c) accessing a network over the single fabric, **characterized by**
(d) using a converged network controller (further referred as "CNC") adapted to support said different types of traffic and a functionality split.

21. The method according to claim 20, wherein said CNC architecture is used to provide a transmission control protocol (further referred as "TCP") offload, an internet small computer system interface (further referred as "iSCSI") acceleration, and/or a full-functionality remote direct memory access (further referred as "RDMA").

22. The method according to claim 20 or 21, wherein said CNC architecture is used to provide a flow-through service, and/or a transmission control protocol (further referred as "TCP") that provides TCP offload services.

23. The method according to claim 20, wherein (a), (b) and (c) are performed over a single Ethernet connector of a server in the data center.

## Patentansprüche

1. Datenzentrum mit:
einer ersten Schicht, die einen ersten Server aufweist;
einer zweiten Schicht, die dazu ausgelegt ist, an die erste Schicht anzukoppeln, wobei die zweite Schicht einen zweiten Server aufweist; und
einer dritten Schicht, die dazu ausgelegt ist, an die zweite Schicht anzukoppeln, wobei die dritte Schicht einen dritten Server aufweist,
wobei wenigstens einer des ersten Servers, des zweiten Servers und des dritten Servers eine Vielzahl verschiedener Verkehrstypen über eine einzige Fabric verarbeitet,
**gekennzeichnet durch**
eine konvergente Netzwerk-Controller (Converged Network Controller) (im Weiteren als "CNC" bezeichnet) -Architektur, die dazu ausgelegt ist, die verschiedenen Verkehrstypen und eine Funktionalitätsaufspaltung zu unterstützen.

2. Datenzentrum nach Anspruch 1, wobei die CNC-Architektur dazu ausgelegt ist, eine Übertragungssteuerungsprotokoll (Transmission Control Protocol) (im Weiteren als "TCP" bezeichnet) -Offload-Maschine, eine internet Small Computer System Interface (im Weiteren als "iSCSI" bezeichnet) -Beschleunigung und/oder einen Vollfunktionalitäts-Remote Direct Memory Access (im Weiteren als "RDMA" bezeichnet) bereitzustellen.

3. Datenzentrum nach Anspruch 1 oder 2, wobei die CNC-Architektur dazu ausgelegt ist, eine Durchfluss-Network Interface Card (im Weiteren als "NIC" bezeichnet) und/oder einen Übertragungssteuerungsprotokoll (Transmission Control Protocol) (im Weiteren als "TCP" bezeichnet) - fähigen Ethernet-Controller bereitzustellen, der TCP-Offload-Dienste bereitstel It.

4. Datenzentrum nach Anspruch 1, wobei der erste Server wenigstens Netzwerkverkehr und Direct Attached Storage (im Weiteren als "DAS" bezeichnet) -Verkehr über die einzige Fabric verarbeitet.

5. Datenzentrum nach Anspruch 1, wobei der erste Server einen einzigen Controller zum Verarbeiten von wenigstens Netzwerkverkehr und DAS-Verkehr verwendet.

6. Datenzentrum nach Anspruch 1, wobei der zweite Server wenigstens zwei von Netzwerkverkehr, Storage-Verkehr und Cluster-Verkehr über die einzige Fabric verarbeitet.

7. Datenzentrum nach Anspruch 1, wobei der zweite Server einen einzigen Controller verwendet, um wenigstens zwei zu verarbeiten von Netzwerkverkehr, Storage-Verkehr und Cluster-Verkehr.

8. Datenzentrum nach Anspruch 7, wobei Storage-Verkehr Verkehr von einer Redundant Array of Independent Disks (im Weiteren als "RAID" bezeichnet) -Konfiguration oder Verkehr von Speichervorrichtungen aufweist, auf die über ein Netzwerk zugegriffen werden kann.

9. Datenzentrum nach Anspruch 1, wobei der dritte Server wenigstens zwei von Netzwerkverkehr, Storage-Verkehr und Cluster-Verkehr über die einzige Fabric verarbeitet.

10. Server mit:
einem integrierten Chip;
einer Ethernet-Verbindungsvorrichtung, die dazu ausgelegt ist, an den integrierten Chip anzukoppeln,
wobei die Ethernet-Verbindungsvorrichtung und der integrierte Chip eine Vielzahl verschiedener Verkehrstypen verarbeiten können,
**gekennzeichnet durch**
einen konvergenten Netzwerk-Controller (Converged Network Controller) (im Weiteren als "CNC" bezeichnet), der dazu ausgelegt ist, die verschiedenen Verkehrstypen und eine Funktionalitätsaufspaltung zu unterstützen.

11. Server nach Anspruch 10, wobei der CNC dazu ausgelegt ist, eine Übertragungssteuerungsprotokoll (Transmission Control Protocol) (im Weiteren als "TCP" bezeichnet) -Offload-Maschine, eine internet Small Computer System Interface (im Weiteren als "iSCSI" bezeichnet) - Beschleunigung und/oder einen Vollfunktionalitäts-Remote Direct Memory Access (im Weiteren als "RDMA" bezeichnet) bereitzustellen.

12. Server nach Anspruch 10 oder 11, wobei der CNC dazu ausgelegt ist, eine Durchfluss-Network Interface Card (im Weiteren als "NIC" bezeichnet) und/oder einen Übertragungssteuerungsprotokoll (Transmission Control Protocol) (im Weiteren als "TCP" bezeichnet) -fähigen Ethernet-Controller bereitzustellen, der TCP-Offload-Dienste bereitstellt.

13. Server nach Anspruch 10, wobei der Server einen Bladeserver aufweist, und
wobei der integrierte Chip Teil einer in dem Bladeserver angeordneten Blade ist.

14. Server nach Anspruch 10, wobei die Ethernet-Verbindungsvorrichtung die Vielzahl verschiedener Verkehrstypen über eine einzige Fabric verarbeitet.

15. Verfahren zum Kommunizieren mit einem Server, das umfasst:
(a) Verwenden einer einzigen Fabric für eine Vielzahl verschiedener Verkehrstypen; und
(b) Verarbeiten der Vielzahl verschiedener Verkehrstypen über eine einzige Layer 2 (im Weiteren als "L2" bezeichnet) -Verbindungsvorrichtung des Servers,
**gekennzeichnet durch**
(c) Verwenden eines konvergenten Netzwerk-Controllers (Converged Network Controller) (im Weiteren als "CNC" bezeichnet), der dazu ausgelegt ist, die verschiedenen Verkehrstypen und eine Funktionalitätsaufspaltung zu unterstützen.

16. Verfahren nach Anspruch 15, wobei die CNC-Architektur verwendet wird, um eine Übertragungssteuerungsprotokoll (Transmission Control Protocol) (im Weiteren als "TCP" bezeichnet) -Offload, eine internet Small Computer System Interface (im Weiteren als "iSCSI" bezeichnet) - Beschleunigung und/oder einen Vollfunktionalitäts-Remote Direct Memory Access (im Weiteren als "RDMA" bezeichnet) bereitzustellen.

17. Verfahren nach Anspruch 15 oder 16, wobei die CNC-Architektur verwendet wird, um einen Durchfluss-Dienst und/oder ein Übertragungssteuerungsprotokoll (Transmission Control Protocol) (im Weiteren als "TCP" bezeichnet) bereitzustellen, das TCP-Offload-Dienste bereitstellt.

18. Verfahren nach Anspruch 15, wobei die einzige Fabric eine Ethernetbasierte Fabric aufweist.

19. Verfahren nach Anspruch 15, wobei Schritt (b) das Verarbeiten der Vielzahl verschiedener Verkehrstypen über eine Ethernet-Verbindungsvorrichtung des Servers umfasst.

20. Verfahren zum Kommunizieren in einem Datenzentrum, das umfasst:
(a) Zugreifen auf ein Speichersystem über eine einzige Fabric;
(b) Zugreifen auf ein Cluster über die einzige Fabric; und
(c) Zugreifen auf ein Netzwerk über die einzige Fabric,
**gekennzeichnet durch**
(d) Verwenden eines konvergenten Netzwerk-Controllers (Converged Network Controller) (im Weiteren als "CNC" bezeichnet), der dazu ausgelegt ist, die verschiedenen Verkehrstypen und eine Funktionalitätsaufspaltung zu unterstützen.

21. Verfahren nach Anspruch 20, wobei die CNC-Architektur verwendet wird, um eine Übertragungssteuerungsprotokoll (Transmission Control Protocol) (im Weiteren als "TCP" bezeichnet) -Offload, eine internet Small Computer System Interface (im Weiteren als "iSCSI" bezeichnet) - Beschleunigung und/oder einen Vollfunktionalitäts-Remote Direct Memory Access (im Weiteren als "RDMA" bezeichnet) bereitzustellen.

22. Verfahren nach Anspruch 20 oder 21, wobei die CNC-Architektur verwendet wird, um einen Durchfluss-Dienst und/oder ein Übertragungssteuerungsprotokoll (Transmission Control Protocol) (im Weiteren als "TCP" bezeichnet) bereitzustellen, das TCP-Offload-Dienste bereitstellt.

23. Verfahren nach Anspruch 20, wobei (a), (b) und (c) über eine einzige Verbindungsvorrichtung eines Servers in dem Datenzentrum durchgeführt werden.

## Revendications

1. Centre de données, comprenant :
un premier niveau comprenant un premier serveur ;
un deuxième niveau adapté à une connexion au premier niveau, le deuxième niveau comprenant un deuxième serveur ; et
un troisième niveau adapté à une connexion au deuxième niveau, le troisième niveau comprenant un troisième serveur,
dans lequel au moins un parmi le premier serveur, le deuxième serveur et le troisième serveur traite une pluralité de différents types de trafic sur un maillage complexe unique,
**caractérisé par**
une architecture de contrôleur de réseau convergent (ci-après appelé « CNC ») adaptée à supporter lesdits différents types de trafic et un partage de fonctionnalités.

2. Centre de données selon la revendication 1, dans lequel ladite architecture de CNC est adaptée à fournir un moteur de transfert de protocole de contrôle de transmission (ci-après appelé « TCP »), une accélération d'interface de petit système informatique sur Internet (ci-après appelée « iSCSI »), et/ou un accès direct en mémoire distant (ci-après appelé « RDMA ») à fonctionnalités complètes.

3. Centre de données selon la revendication 1 ou 2, dans lequel ladite architecture de CNC est adaptée à fournir une carte d'interface réseau (ci-après appelée « NIC ») de transit, et/ou un contrôleur Ethernet compatible protocole de contrôle de transmission (ci-après appelé « TCP ») qui offre des services de transfert TCP.

4. Centre de données selon la revendication 1, dans lequel le premier serveur traite au moins un trafic réseau et un trafic de stockage à connexion directe (ci-après appelé « DAS ») sur le maillage complexe unique.

5. Centre de données selon la revendication 1, dans lequel le premier serveur utilise un contrôleur unique pour traiter au moins un trafic réseau et un trafic DAS.

6. Centre de données selon la revendication 1, dans lequel le deuxième serveur traite au moins deux parmi un trafic réseau, un trafic de stockage et un trafic de grappes sur le maillage complexe unique.

7. Centre de données selon la revendication 1, dans lequel le deuxième serveur utilise un contrôleur unique pour traiter au moins deux parmi un trafic réseau, un trafic de stockage et un trafic de grappes.

8. Centre de données selon la revendication 7, dans lequel le trafic de stockage comprend un trafic d'une configuration d'un réseau redondant de disques indépendants (ci-après appelé « RAID ») ou un trafic de dispositifs de stockage accessibles par l'intermédiaire d'un réseau.

9. Centre de données selon la revendication 1, dans lequel le troisième serveur traite au moins deux parmi un trafic réseau, un trafic de stockage et un trafic de grappes sur le maillage complexe unique.

10. Serveur, comprenant :
une puce intégrée ;
un connecteur Ethernet adapté à une connexion à la puce intégrée,
dans lequel le connecteur Ethernet et la puce intégrée peuvent traiter une pluralité de différents types de trafic,
**caractérisé par**
un contrôleur de réseau convergent (ci-après appelé « CNC ») adapté à supporter lesdits différents types de trafic et un partage de fonctionnalités.

11. Serveur selon la revendication 10, dans lequel ledit CNC est adapté à fournir un moteur de transfert de protocole de contrôle de transmission (ci-après appelé « TCP »), une accélération d'interface de petit système informatique sur Internet (ci-après appelée « iSCSI »), et/ou un accès direct en mémoire distant (ci-après appelé « RDMA ») à fonctionnalités complètes.

12. Serveur selon la revendication 10 ou 11, dans lequel ledit CNC est adapté à fournir une carte d'interface réseau (ci-après appelée « NIC ») de transit, et/ou un contrôleur Ethernet compatible protocole de contrôle de transmission (ci-après appelé « TCP ») qui offre des services de transfert TCP.

13. Serveur selon la revendication 10,
dans lequel le serveur comprend un serveur lame, et
dans lequel la puce intégrée fait partie d'une lame montée dans le serveur lame.

14. Serveur selon la revendication 10, dans lequel le connecteur Ethernet traite la pluralité de différents types de trafic sur un maillage complexe unique.

15. Procédé de communication avec un serveur, comprenant :
(a) l'utilisation d'un maillage complexe unique pour une pluralité de différents types de trafic ; et
(b) le traitement de la pluralité de différents types de trafic par l'intermédiaire d'un connecteur unique de couche 2 (ci-après appelée « L2 ») du serveur, **caractérisé par**
(c) l'utilisation d'un contrôleur de réseau convergent (ci-après appelé « CNC ») adapté à supporter lesdits différents types de trafic et un partage de fonctionnalités.

16. Procédé selon la revendication 15, dans lequel ladite architecture de CNC est utilisée pour fournir un transfert de protocole de contrôle de transmission (ci-après appelé « TCP »), une accélération d'interface de petit système informatique sur Internet (ci-après appelée « iSCSI »), et/ou un accès direct en mémoire distant (ci-après appelé « RDMA ») à fonctionnalités complètes.

17. Procédé selon la revendication 15 ou 16, dans lequel ladite architecture de CNC est utilisée pour fournir un service de transit, et/ou un protocole de contrôle de transmission (ci-après appelé « TCP ») qui offre des services de transfert TCP.

18. Procédé selon la revendication 15, dans lequel le maillage complexe unique comprend un maillage complexe basé Ethernet.

19. Procédé selon la revendication 15, dans lequel l'étape (b) comprend le traitement de la pluralité de différents types de trafic par l'intermédiaire d'un connecteur Ethernet du serveur.

20. Procédé de communication dans un centre de données, comprenant :
(a) l'accès à un système de stockage sur un maillage complexe unique ;
(b) l'accès à une grappe sur le maillage complexe unique ; et
(c) l'accès à un réseau sur le maillage complexe unique, **caractérisé par**
(d) l'utilisation d'un contrôleur de réseau convergent (ci-après appelé « CNC ») adapté à supporter lesdits différents types de trafic et un partage de fonctionnalités.

21. Procédé selon la revendication 20, dans lequel ladite architecture de CNC est utilisée pour fournir un transfert de protocole de contrôle de transmission (ci-après appelé « TCP »), une accélération d'interface de petit système informatique sur Internet (ci-après appelée « iSCSI »), et/ou un accès direct en mémoire distant (ci-après appelé « RDMA ») à fonctionnalités complètes.

22. Procédé selon la revendication 20 ou 21, dans lequel ladite architecture de CNC est utilisée pour fournir un service de transit, et/ou un protocole de contrôle de transmission (ci-après appelé « TCP ») qui offre des services de transfert TCP.

23. Procédé selon la revendication 20, dans lequel (a), (b) et (c) sont mises en oeuvre sur un connecteur Ethernet unique d'un serveur dans le centre de données.
